# EUROPÄISCHE PATENTSCHRIFT

(11) **EP 3 120 000 B1**
(45) Veröffentlichungstag und Bekanntmachung des Hinweises auf die Patenterteilung: **16.05.2018**
(21) Anmeldenummer: 15711482.8
(22) Anmeldetag: 18.03.2015
(51) Int. Cl.: F01N 3/20, F04C 5/00

(54) **PUMPE ZUR FÖRDERUNG EINER FLÜSSIGKEIT, INSBESONDERE EINES ABGASREINIGUNGSADDITIVS**
PUMP FOR CONVEYING A LIQUID, PARTICULARLY AN EXHAUST GAS CLEANING ADDITIVE
POMPE POUR TRANSPORTER UN LIQUIDE, NOTAMMENT UN ADDITIF DE PURIFICATION DE GAZ D'ÉCHAPPEMENT

(30) Priorität: 19.03.2014 EP 14290071
(43) Veröffentlichungstag der Anmeldung: 25.01.2017
(73) Patentinhaber: Continental Automotive GmbH, 30165 Hannover (DE)
(72) Erfinder: HODGSON, Jan, 53840 Troisdorf (DE); MAGUIN, Georges, F-57155 Marly (FR); KOPP, Yves, F-57510 Remering-les-Puttelange (FR)
(86) Internationale Anmeldenummer: PCT/EP2015/055668
(87) Internationale Veröffentlichungsnummer: WO 2015/140207

(56) Entgegenhaltungen:
- WO-A1-2013/057178
- FR-A- 1 228 534
- US-A- 2 544 628
- US-A- 3 408 947
- US-A- 4 332 534

## Beschreibung

Die Erfindung betrifft eine Pumpe zur Förderung einer Flüssigkeit, die insbesondere dazu geeignet ist, ein Abgasreinigungsadditiv (wie beispielsweise Harnstoff-Wasser-Lösung) in eine Abgasbehandlungsvorrichtung zur Reinigung der Abgase einer Verbrennungskraftmaschine zu fördern.

Abgasbehandlungsvorrichtungen, in denen ein flüssiges Additiv zur Abgasreinigung eingesetzt wird, sind beispielsweise im Kraftfahrzeugbereich weit verbreitet, wobei insbesondere auch Stickstoffoxidverbindungen aus dem Abgas entfernt werden sollen. In derartigen Abgasbehandlungsvorrichtungen wird das sogenannte SCR-Verfahren (SCR-Verfahren, SCR = Selective Catalytic Reduction) durchgeführt. Bei diesem Verfahren werden Stickstoffoxidverbindungen im Abgas mit einem Reduktionsmittel (normalerweise Ammoniak) reduziert. Ammoniak wird im Kraftfahrzeug vielfach nicht direkt bevorratet, sondern in Form eines flüssigen (Abgas-)Additivs, welches abgasextern (in einem eigens vorgesehenen externen Reaktor) und/oder abgasintern (in der Abgasbehandlungsvorrichtung) zu Ammoniak umgesetzt wird. Als flüssiges Additiv wird in diesem Zusammenhang Harnstoff-Wasser-Lösung eingesetzt. Eine Harnstoff-Wasser-Lösung mit einem Harnstoffgehalt von 32,5 % ist unter dem Handelsnamen AdBlue® erhältlich.

Das flüssige Additiv wird im Kraftfahrzeug üblicherweise in einem Tank gespeichert und mittels eines Fördermoduls der Abgasbehandlungsvorrichtung zugegeben. Ein Fördermodul umfasst insbesondere eine Pumpe. Weiterhin können dem Fördermodul folgende Komponenten zugeordnet sein: Filter, Sensor, Ventil und/oder Dosiereinheit.

Problematisch bei einem Fördermodul für flüssiges Additiv ist, dass dieses bei niedrigen Temperaturen einfrieren kann. Eine 32,5 % Harnstoff-Wasser-Lösung friert beispielsweise bei -11 °C ein. Derart niedrige Temperaturen können im Kraftfahrzeugbereich insbesondere während langer Stillstandsphasen im Winter auftreten. Beim Einfrieren des Additivs tritt eine Volumenvergrößerung auf, die die Leitungen, Kanäle und/oder Komponenten des Fördermoduls beschädigen oder sogar zerstören können. Hierbei steht insbesondere auch die Pumpe im Fokus. Eine Zerstörung der Pumpe kann beispielsweise dadurch vermieden werden, dass das Fördermodul bei Deaktivierung entleert wird, so dass während einer Stillstandsphase kein flüssiges Additiv in dem Fördermodul verbleibt. Eine andere Vorgehensweise, die Pumpe zu schützen, ist, die Komponenten so (flexibel) auszulegen, dass keine Beschädigungen durch die Volumenausdehnung des flüssigen Additivs beim Einfrieren auftreten können.

Insbesondere innerhalb der Pumpe ist es technisch schwierig, Maßnahmen zum Einfrierschutz zu gewährleisten, weil die Pumpe in intensivem Kontakt mit dem flüssigen Additiv sein muss. Darüber hinaus ist eine vollständige Entleerung der Pumpe oft problematisch, weil hierdurch die Wiederaufnahme der Förderung nach einem Betriebsstopp deutlich erschwert wird. Die Pumpe zur Förderung von flüssigem Additiv sollte zudem kostengünstig sein und eine große Haltbarkeit aufweisen. Dies umfasst insbesondere eine hohe Zuverlässigkeit bzw. eine geringe Ausfallwahrscheinlichkeit sowie eine geringe Alterung, wobei hier insbesondere eine Veränderung des Betriebsverhaltens der Pumpe infolge von Abnutzung mit "Alterung" gemeint ist.

Darüber hinaus ist ggf. auch eine exakte Fördermenge und Lieferfähigkeit bei der Pumpe wichtig. Damit bzw. mit dem Begriff "Dosiergenauigkeit" ist hier insbesondere gemeint, dass die von der Pumpe tatsächlich geförderte Flüssigkeitsmenge genau von eindeutig bestimmbaren Eingangsgrößen vorgegeben ist, wobei der Begriff "Eingangsgrößen" hier insbesondere die elektrische Ansteuerung des Betriebs der Pumpe (Spannungsprofil und/oder Stromprofil zum Antrieb der Pumpe, Frequenz von Strompulsen zum Antrieb der Pumpe usw.) beschreibt. Insbesondere ist es wichtig, dass die Anzahl und/oder Relevanz von Quereinflüssen, die die Abhängigkeit der Fördermenge von den Eingangsgrößen beeinflusst, gering gehalten wird. Derartige Quereinflüsse können beispielsweise die Temperatur der Pumpe, der Druck in der Pumpe usw. sein. Wenn signifikante Quereinflüsse nicht vermeidbar sind, sollte die Auswirkung dieser Quereinflüsse auf die Fördermenge möglichst genau berechnet bzw. kontrolliert werden können. Die Dosiergenauigkeit einer Pumpe kann beispielsweise durch eine statistische Abweichung zwischen einer erwarteten, gewünschten Fördermenge und einer tatsächlich geförderten Fördermenge beschrieben werden. Beispielsweise hat eine Pumpe eine hohe Dosiergenauigkeit, wenn diese Abweichung im Mittel kleiner weniger 10 % beträgt. Eine Dosiergenauigkeit (für HWL-Fördermengen beim SCR-Verfahren) wird beispielsweise als gering angesehen werden, wenn diese Abweichung im Mittel mehr als 20 % beträt. Diese Prozentwerte sind jeweils nur als Beispiel zu verstehen.
Aus den Druckschriften US 2,544,628, US 3,408,947, DE 285 39 16 A1 und DE 381 52 52 A1 und US 4,332,534 ist ein Pumpentyp bekannt, der auch als Orbitalpumpe bezeichnet wird. Dieser Pumpentyp ist einerseits verhältnismäßig beständig gegenüber einer Volumenausdehnung der Flüssigkeit beim Einfrieren, andererseits kann dieser Pumpentyp auch in umgekehrter Förderrichtung betrieben werden, so dass eine Entleerung eines Fördermoduls technisch einfach möglich ist. Es besteht jedoch das Bedürfnis, diesen Pumpentyp an die Anforderungen im Umfeld des SCR-Verfahrens anzupassen, insbesondere hinsichtlich der Dosierungenauigkeit und/oder des Alterungsverhaltens (z. B. infolge erheblicher Spannungszustände in der Pumpenmembran) zu verbessern.
Hiervon ausgehend ist Aufgabe der hier vorliegenden Erfindung, eine besonders vorteilhafte Pumpe zur Förderung einer Flüssigkeit vorzustellen, die die vorstehenden Probleme zumindest teilweise löst und insbesondere zur Förderung von flüssigen Additiven zur Abgasreinigung (wie Harnstoff-Wasser-Lösung) geeignet ist.
Diese Aufgaben werden gelöst mit einer Pumpe gemäß den Merkmalen des Patentanspruchs 1. Weitere vorteilhafte Ausgestaltungen der Pumpe sind in den abhängig formulierten Patentansprüchen angegeben. Es ist darauf hinzuweisen, dass die in den einzelnen Patentansprüchen dargestellten Merkmale in beliebiger, technologisch sinnvoller Weise miteinander kombinierbar sind und durch erläuternde Sachverhalte aus der Beschreibung ergänzt werden können, wobei weitere Ausführungsvarianten der Pumpe aufgezeigt werden.
Es wird eine Pumpe zur Förderung einer Flüssigkeit vorgeschlagen, welche zumindest ein Pumpengehäuse mit mindestens einem Einlass und mindestens einem Auslass aufweist. An dem Pumpengehäuse ist ein Exzenter angeordnet, der um eine Achse relativ zu dem Pumpengehäuse drehbar ist. Zwischen dem Pumpengehäuse und dem Exzenter ist ein (ringförmiges) verformbares Element angeordnet. Mit dem verformbaren Element und einer (zylindrischen) Umfangsfläche des Pumpengehäuses ist ein Förderkanal von dem mindestens einen Einlass zu dem mindestens einen Auslass ausgebildet. Weiter wird das verformbare Element von dem Exzenter abschnittsweise derart gegen das Pumpengehäuse gedrückt, dass mindestens eine verschiebbare Abdichtung des Förderkanal und zumindest ein geschlossenes Pumpenvolumen in dem Förderkanal ausgebildet sind, die zur Förderung der Flüssigkeit durch eine Bewegung des Exzenters entlang des Förderkanals von dem Einlass zu dem Auslass verschiebbar sind, wobei zumindest ein Kanalquerschnitt des Förderkanals durch die (zylindrische) Umfangsfläche, eine zurücktretende Kanaloberfläche des verformbaren Elements und mindestens einen (ringförmigen) Abdichtkontakt zwischen der Umfangsfläche und dem verformbaren Element begrenzt ist. Das verformbare Element weist in axialer Richtung beidseitig und umlaufend in einem Randbereich jeweils einen starren Zentrierungsring auf. Die Zentrierungsringe sind in radialer Richtung beweglich gelagert. Der mindestens eine Abdichtkontakt ist von einer umlaufenden Aufdickung in dem Randbereich des verformbaren Elementes gebildet. Eine Pumpe mit diesem Aufbau kann auch als Orbitalpumpe bezeichnet werden. Die Pumpe weist eine (zentrale) Achse auf, um die herum der Exzenter gedreht werden kann. Dafür verläuft vorzugsweise entlang der Antriebsachse eine Antriebswelle, die den Exzenter mit einem (elektrisch betreibbaren) Antrieb verbindet. Der Antrieb ist vorzugsweise entlang der Achse oberhalb und unterhalb des Pumpengehäuses angeordnet. Zur räumlichen Beschreibung der Pumpe und der Komponenten wird im Folgenden eine radiale Richtung angenommen, die senkrecht auf der Achse der Pumpe steht und sich ausgehend von der Achse der Pumpe in radialer Richtung nach außen erstreckt. Senkrecht und insbesondere tangential zu der Achse und zu der radialen Richtung soll eine Umfangsrichtung definiert werden. Die (zentrale) Achse bildet vorzugsweise auch eine Symmetrieachse des Gehäuses aus. Der Förderkanal verläuft von dem Einlass zu dem Auslass der Pumpe zumindest abschnittsweise entlang dieser Umfangsrichtung durch das Pumpengehäuse bzw. entlang der Umfangsfläche des Pumpengehäuses. Zur weiteren Beschreibung der Pumpe wird auch eine Mittelebene der Pumpe definiert. Diese Mittelebene ist senkrecht zu der Achse angeordnet. In der Mittelebene liegen das Pumpengehäuse, der Exzenter, das verformbare Element und der Förderkanal.

Das Pumpengehäuse der Pumpe ist vorzugsweise nach Art eines Rings oder einer zylindrischen Kammer aufgebaut, worin der Exzenter innen angeordnet ist. Dies ist der bevorzugte Aufbau der Pumpe. Bei diesem Aufbau ist die Umfangsfläche des Pumpengehäuses eine Innenumfangsfläche. Das Pumpengehäuse kann auch als (äußerer) Stator angesehen werden, wobei der Exzenter als (innerer) Rotor bezeichnet wird. Gemäß einer weiteren Ausführungsform der Pumpe ist es möglich, dass das Pumpengehäuse einen inneren Stator bildet, welcher von dem Exzenter umgeben ist. Dann bildet der Exzenter einen äußeren Rotor. Diese Ausführungsvariante ist eine kinematische Umkehr der Ausführungsvariante mit der Umfangsfläche als Innenumfangsfläche. Der Einlass und der Anlass sind an dem Pumpengehäuse angeordnet und ermöglichen das Einströmen und das Ausströmen der Flüssigkeit in das Pumpengehäuse bzw. in den Förderkanal. Das Pumpengehäuse ist vorzugsweise aus Kunststoff. In dem Pumpengehäuse können Versteifungsstrukturen integriert sein. In einer bevorzugten Ausführungsvariante ist in einem Pumpengehäuse aus Kunststoff eine ringförmige metallische Einlage integriert, die das Pumpengehäuse versteift.

Mit dem Begriff "Exzenter" ist hier insbesondere eine kreisförmige Struktur gemeint, die exzentrisch (außermittig) zu der Achse angeordnet ist und durch eine Drehung um die Achse herum eine exzentrische Bewegung durchführt. Zwischen dem Pumpengehäuse und dem Exzenter ist ein ringförmiger bzw. umlaufender Spalt gebildet, in dem das verformbare Element angeordnet ist. Der Förderkanal ist (innerhalb des Spalts) zwischen dem verformbaren Element und dem Pumpengehäuse angeordnet und wird von dem Pumpengehäuse und dem verformbaren Element begrenzt. Der Spalt hat mindestens eine Engstelle, die sich durch eine Drehung des Exzenters entlang des Pumpengehäuses bzw. entlang des Förderwegs verschiebt. An der Engstelle ist das verformbare Element gegen das Pumpengehäuse gedrückt, so dass dort die verschiebbare Abdichtung gebildet ist. Umfasst sind hier insbesondere auch sogenannte "mehrwertige" Exzenter, die mehrere Engstellen aufweisen und damit auch mehrere Abdichtungen (zwischen dem verformbaren Element und dem Pumpengehäuse) ausbilden. Solche Exzenter können beispielsweise als Rollenexzenter ausgeführt werden, die eine Mehrzahl von Rollen aufweisen, die auf dem verformbaren Element abrollen. Dabei bilden die Rollen jeweils die Engstellen aus.

Der Förderkanal hat zwischen dem Pumpengehäuse und dem verformbaren Element einen für Flüssigkeit durchströmbaren Kanalquerschnitt, der beispielsweise (je nach Größe der Pumpe) an der größten Stelle zwischen 1 mm² (Quadratmillimeter) und 50 mm² betragen kann. Der Förderkanal ist ringförmig bzw. umlaufend um die Achse ausgebildet. Der Einlass und der Auslass sind in einer Förderrichtung der Pumpe vorzugsweise mit einem Winkelabstand von mehr als 270° zueinander (gemessen in der Mittelebene) angeordnet. Entgegen der Förderrichtung haben der Einlass und der Auslass damit einen Winkelabstand von weniger als 90° zueinander.

Der Exzenter ist vorzugsweise mehrteilig ausgeführt. Der Exzenter weist vorzugsweise einen inneren Bereich auf, welcher eine exzentrische Drehbewegung ausführt. Zusätzlich kann ein äußerer Lagerring vorgesehen sein, welcher den inneren Bereich umgibt. Zwischen dem inneren Bereich und dem äußeren Lagerring befindet sich vorzugsweise mindestens ein Lager. Dieses Lager kann ein Kugellager oder ein Rollenlager sein. Der innere Exzenterbereich des Exzenters führt im Betrieb eine Drehung um die Achse aus. Aufgrund der exzentrischen Anordnung und ggf. auch aufgrund der äußeren Form des Exzenters ergibt sich eine exzentrische Bewegung der Oberfläche des Exzenters. Die exzentrische Bewegung wird auf den äußeren Lagerring übertragen. Durch ein Lager zwischen dem inneren Bereich und dem Lagerring kann eine exzentrische Drehbewegung des inneren Bereichs in eine exzentrische Taumelbewegung des Lagerings umgewandelt werden, ohne dass der Drehbewegungsanteil der Bewegung des inneren Bereichs mit übertragen wird. Die Tatsache, dass die Bewegung des Lagerrings keinen Drehbewegungsanteil aufweist, ermöglicht es, Schubspannungen in dem verformbaren Element und innere Reibungskräfte der Pumpe zu reduzieren. Das verformbare Element wird durch die Bewegung des Exzenters gewalkt. An einer Kontaktfläche des Exzenters und des verformbaren Elements wirken vorzugsweise nur Druckkräfte und im Wesentlichen keine Reibungskräfte. Eine entsprechende Aufteilung des Exzenters in einen inneren Exzenterbereich und einen Lagerring ist auch möglich, wenn der Exzenter ein äußerer Rotor ist, der um ein (inneres) Pumpengehäuse herum angeordnet ist. Es ist auch möglich, dass auf den äußeren Lagerring verzichtet wird und die Rollen des Lagers unmittelbar auf bzw. an dem verformbaren Element abrollen.

Das verformbare Element ist vorzugsweise derart zwischen dem Exzenter und dem Pumpengehäuse angeordnet, dass der Exzenter das verformbare Element bereichsweise derart gegen bzw. an das Pumpengehäuse drückt, so dass damit die mindestens eine verschiebbare Abdichtung ausgebildet ist. An der Abdichtung existiert ein (linienförmiger oder flächiger) Kontakt zwischen dem verformbaren Element und dem Pumpengehäuse, der von der Flüssigkeit nicht durchströmt werden kann. Anders ausgedrückt, liegt das verformbare Element vollständig an dem Pumpengehäuse an, so dass der Kanalquerschnitt im Bereich dieser verschiebbaren Abdichtung keine Querschnittsfläche hat. Der Förderkanal ist demnach im Bereich der verschiebbaren Abdichtung unterbrochen. Damit ist innerhalb des Förderkanals ein geschlossenes Pumpenvolumen gebildet. Mit einem geschlossenen Pumpenvolumen ist gemeint, dass ein zumindest einseitig verschlossener Abschnitt des Förderkanals existiert. Durch eine Verschiebung der verschiebbaren Abdichtung wird auch das mindestens eine geschlossene Pumpenvolumen verschoben, so dass die Flüssigkeit, die sich in dem geschlossenen Pumpenvolumen befindet, gefördert wird. Vorzugsweise werden beim Betrieb der Pumpe mehrere geschlossene Pumpenvolumina von dem Einlass der Pumpe zu dem Auslass der Pumpe verschoben, um die Flüssigkeit zu fördern. Damit wird ein geschlossenes Pumpenvolumen in der Nähe des Einlasses ausgebildet (definiert zumindest einseitig verschlossen) und dann am Auslass aufgelöst (definiert zumindest einseitig wieder geöffnet). An dem Einlass ist ein geschlossenes Pumpenvolumen nur einseitig stromab durch eine verschiebbare Abdichtung verschlossen und stromauf mit dem Einlass verbunden, so dass Flüssigkeit durch den Einlass in das geschlossene Pumpenvolumen einströmen kann. An dem Auslass ist das geschlossene Pumpenvolumen (nur noch) einseitig allerdings stromauf durch eine Abdichtung verschlossen und stromab mit dem Auslass verbunden, so dass die Flüssigkeit durch den Auslass aus dem geschlossenen Pumpenvolumen ausströmen kann. Dazwischen existiert (auf dem Weg des geschlossenen Pumpenvolumens von dem Einlass zu dem Auslass) eine Phase, in der das geschlossene Pumpenvolumen stromaufwärts und stromabwärts durch die mindestens eine verschiebbare Abdichtung verschlossen ist.

Das verformbare Element kann auch als verformbare Membran bezeichnet werden. Mit dem Begriff "Membran" ist keine zwingende Aussage darüber getroffen, ob das verformbare Element eine flächige Ausdehnung hat. Der Begriff "Membran" soll als Hinweis verstanden werden, dass es sich bei dem verformbaren Element um eine flexible Struktur handelt, die zur Förderung von Flüssigkeit verformt werden kann. Als Material für das verformbare Element bzw. die verformbare Membran wird vorzugsweise ein Elastromer (beispielsweise Kautschuk oder Latex) verwendet. Zur Erhöhung der Haltbarkeit und/oder zur Herstellung und Aufrechterhaltung der Flexibilität kann das Material des verformbaren Elements Zusatzstoffe enthalten. Vorzugsweise ist das verformbare Element in alle Richtungen (in axialer Richtung, in radialer Richtung und in Umfangsrichtung) flexibel. Es ist allerdings auch möglich, dass das verformbare Element eine teilweise gerichtete Flexibilität hat. Beispielsweise kann es eine höhere Flexibilität in radialer Richtung als in Umfangsrichtung und in axialer Richtung aufweisen. Ein Verformen des verformbaren Elements in eine Richtung bedingt typischerweise auch eine Verformung in andere Richtungen. Das verformbare Element dehnt sich beispielsweise in axialer Richtung und/oder Umfangsrichtung aus, wenn es in radialer Richtung zusammengedrückt wird.

An der Pumpe ist vorzugsweise eine stationäre Abdichtung vorgesehen, die eine nicht gewollte Rückströmung der Flüssigkeit von dem Auslass zu dem Einlass (entgegen der Förderrichtung) verhindert. Die stationäre Abdichtung kann ortsfest mit dem Pumpengehäuse bereitgestellt werden und zwischen dem Auslass und dem Einlass positioniert sein. Das verformbare Element kann im Bereich der stationären Abdichtung beispielsweise an das Pumpengehäuse geklemmt oder angeklebt sein, um eine fluiddichte Abdichtung zwischen dem Pumpengehäuse und dem verformbaren Element dauerhaft zu gewährleisten. Die stationäre Abdichtung ist unabhängig von der Position des Exzenters fluiddicht.

Der Förderkanal in der Pumpe, der den Einlass mit dem Auslass verbindet, hat einen Kanalquerschnitt. Dieser Kanalquerschnitt wird einerseits durch das Pumpengehäuse und andererseits durch das verformbare Element begrenzt.

Vorzugsweise existieren zwei (ringförmige) Abdichtkontakte, an denen sich das verformbare Element und das Pumpengehäuse an der (zylindrischen) Umfangsfläche berühren und die entlang des Förderkanals bzw. entlang der Umfangsrichtung verlaufen. Zwischen diesen zwei (ringförmigen) Abdichtkontakten befindet sich der Kanalquerschnitt des Förderkanals. Im Folgenden sind Abdichtkontakte und die im Zusammenhang mit Abdichtkontakten beschriebenen weiteren Elemente der Pumpe häufig nur einfach beschrieben, wobei dann üblicherweise angedeutet ist, dass "mindestens" ein Abdichtkontakt bzw. "mindestens" ein weiteres Element (Gegenhalter, Aufdickung, Aufnahme, Anschlagsfläche, Randbereich etc.) vorhanden ist. Durch diese Formulierungsweise soll auch eine Pumpe umfasst sein, bei der die beschriebenen Elemente nur auf einer Seite einer Mittelebene der Pumpe ausgebildet sind, wobei auf der anderen Seite der Mittelebene ein anderer (abweichender) Aufbau verwirklicht ist. Bevorzugt ist allerdings, dass die Pumpe und insbesondere das verformbare Element mit den angrenzenden weiteren Elementen symmetrisch zu der Mittelebene aufgebaut sind, so dass sämtliche auf einer Seite der Pumpe vorhandenen Elemente (Gegenhalter, Abdichtkontakt, Aufdickung, Aufnahme, Anschlagfläche, Randbereich etc.) auf der anderen Seite der Mittelebene (spiegelbildlich) ein weiteres Mal vorhanden sind.

Die beschriebenen Elemente (Gegenhalter, Abdichtkontakt, Aufdickung, Aufnahme, Anschlagfläche, Randbereich etc.) sind darüber hinaus vorzugsweise alle ringförmig ausgebildet. Hiermit ist gemeint, dass die Elemente (zumindest abschnittsweise) rotationssymmetrisch zu der Achse der Pumpe ausgebildet sind. Insbesondere im Bereich der stationären Abdichtung weichen die genannten Elemente allerdings regelmäßig von der rotationssymmetrischen Form ab. Die genannten Elemente sind dort beispielsweise unterbrochen. Die genannten Elemente werden hier trotz Abweichungen von der rotationssymmetrischen Form als "ringförmig" bezeichnet. Daher ist mit dem Begriff "ringförmig" hier insbesondere auch "zumindest abschnittsweise ringförmig", "überwiegend ringförmig" und/oder "teilweise ringförmig" umfasst.

Mit der Pumpe ist vorzugsweise eine Förderung von Flüssigkeit in Förderrichtung von dem Einlass zu dem Auslass möglich. Durch eine Umkehr der Drehrichtung des Exzenters ist ggf. auch eine Umkehr der Förderrichtung (anstatt vom Einlass zum Auslass, umgekehrt vom Auslass zurück zum Einlass) möglich.

Für die Lösung der eingangs geschilderten Probleme spielt die spezielle Begrenzung des Förderkanals durch die Umfangsfläche des Pumpengehäuses und das verformbare Element eine wichtige Rolle. Der Förderkanal wird bei der vorgeschlagenen Pumpe von einer (zylindrischen) Umfangsfläche des Pumpengehäuses und einer zurücktretende Kanaloberfläche des verformbaren Elements begrenzt. Die (zylindrische) Umfangsfläche ist insbesondere eine Fläche, welche eine plane Zylinderform aufweist und in axialer Richtung weder konkav noch konvex ist. Die zylindrische Umfangsfläche ist vorzugsweise eine Innenfläche des Pumpengehäuses.

Eine zurücktretende Kanaloberfläche kann auch als "konkave" Kanaloberfläche bezeichnet werden. Eine zurücktretende Kanaloberfläche kann auch dadurch definiert werden, diese zwischen zwei (linienförmigen) Abdichtkontakten mit der Umfangsfläche zurücktritt, so dass ein durchströmbarer Querschnitt (der Kanalquerschnitt bzw. die Kanalquerschnittsfläche) gebildet ist. Die Kanaloberfläche tritt gegenüber der Umfangsfläche bzw. gegenüber den Abdichtkontakten zurück.

Erst die konkave bzw. zurücktretende Kanaloberfläche des verformbaren Elements ermöglicht es, dass der Förderkanal einen durchströmbaren Querschnitt hat. Der Begriff "konkav" bedeutet hier nicht zwingend, dass eine (einheitliche) Krümmung der Kanaloberfläche existieren muss. Vielmehr wird durch den Begriff "konkav" auch zum Ausdruck gebracht, dass die Kanaloberfläche zwischen zwei Abdichtkontakten in axialer Richtung zurücktritt, so dass der durchströmbare Querschnitt durch die konkave Oberfläche gebildet ist. Mit anderen Worten: In einer Schnittebene durch den Förderkanal, die von der Achse und einer beliebigen radialen Richtung aufgespannt wird, ist der Kanalquerschnitt von einem Bogensegment der zurücktretenden bzw. konkaven Kanaloberfläche des verformbaren Elements und einer von der Umfangsfläche des Pumpengehäuses gebildeten Linie und zwei punktförmigen Kontaktstellen (der Abdichtkontakte) begrenzt. Wenn die beschriebene (von der Achse und der radialen Richtung aufgespannte) Schnittebene im Bereich der verformbaren Abdichtung durch das verformbare Element und das Pumpengehäuse betrachtet wird, liegt das verformbare Element dort linienförmig an der Umfangsfläche an, so dass der Kanalquerschnitt vollständig geschlossen ist.

Unabhängig von den Betriebsbedingungen der Pumpe stellt die Umfangsfläche des Pumpengehäuses eine eindeutige Begrenzung des Förderkanals (in radialer Richtung) dar. Der mindestens eine (ringförmige) Abdichtkontakt liegt folglich immer auf der Umfangsfläche. An dem mindestens einen Abdichtkontakt wirken radiale Klemmkräfte, die das verformbare Element mit gegen die Umfangsfläche des Pumpengehäuses drücken, um den Förderkanal seitlich (in axialer Richtung) zu begrenzen.

Diese Gestaltung der Abdichtkontakte führt zu einer besonders günstigen Spannungsverteilung innerhalb des verformbaren Elements. Insbesondere wirken die Kräfte an den Abdichtkontakten und die Kräfte an der verschiebbaren Abdichtung parallel zueinander (in radialer Richtung). Vorzugsweise wirken die Abdichtkräfte auf das verformbare Element an der stationären Abdichtung ebenfalls in radialer Richtung parallel zu den Kräften an den Abdichtkontakten und an der verschiebbaren Abdichtung. Durch die beschriebene Bauform einer Orbitalpumpe können unerwünschte mehrachsige Spannungszustände in dem verformbaren Element wirkungsvoll vermieden werden. Dies reduziert die Alterung des verformbaren Elements erheblich. Die hier beschriebene Bauform einer Orbitalpumpe hat eine daher erheblich verbesserte Haltbarkeit. Darüber hinaus kann auch eine gute Dosiergenauigkeit der Pumpe über einen langen Betriebszeitraum der Pumpe gewährleistet werden.

Besonders vorteilhaft ist die Pumpe, wenn sich die (zylindrische) Umfangsfläche in axialer Richtung seitlich des Förderwegs beidseitig fortsetzt.

Hiermit ist insbesondere gemeint, dass die (zylindrische) Umfangsfläche (in axialer Richtung) über die (ringförmigen) Abdichtkontakte hinaus fortgesetzt ist. Beispielsweise erstreckt sich die zylindrische Umfangsfläche (in axialer Richtung) beidseitig zwischen 1 mm (Millimeter) und 10 mm über den Kanalquerschnitt hinaus. Dies ermöglicht es, sicherzustellen, dass die (ringförmigen) Abdichtkontakte auch bei einer axialen Verschiebung aufgrund einer Druckerhöhung in dem Förderkanal weiter in der Umfangsfläche liegen.

Weiterhin vorteilhaft ist die Pumpe, wenn von der Umfangsfläche des Pumpengehäuses und mindestens einem Gegenhalter mindestens eine (ringförmige) Aufnahme gebildet ist, in der mindestens ein (ringförmiger) Randbereich des verformbaren Elements aufgenommen ist.

Vorzugsweise hat das verformbare Element beidseitig zwei ringförmige Randbereiche, die in zwei entsprechend (jeweils beidseitig der Mittelebene) angeordneten Aufnahmen positioniert sind. Der Randbereich des verformbaren Elements beschreibt insbesondere einen in axialer Richtung besonders weit außen liegenden Abschnitt des verformbaren Elements bzw. einen Abschnitt des verformbaren Elements, der besonders weit von der Mittelebene entfernt ist. Die ringförmigen Abdichtkontakte sind vorzugsweise an den ringförmigen Randbereichen des verformbaren Elements angeordnet. Der mindestens eine Gegenhalter ist vorzugsweise ein ringförmiges Bauteil, welches das verformbare Element im Randbereich von innen gegen das Pumpengehäuse abstützt. Zwischen dem Gegenhalter und dem Pumpengehäuse existiert ein ringförmiger Spalt, der die ringförmige Aufnahme bildet. Der mindestens eine Gegenhalter kann in das Pumpengehäuse eingreifen bzw. das Pumpengehäuse (nur abschnittsweise) umgreifen, so dass zwischen dem Gegenhalter und dem Pumpengehäuse die beschriebene ringförmige Aufnahme ausgebildet ist.

Der mindestens eine Gegenhalter unterstützt eine radiale Klemmung des verformbaren Elements. Durch den mindestens einen Gegenhalter und eine von dem mindestens einen Gegenhalter gebildete (ringförmige) Aufnahme kann der Randbereich des verformbaren Elements mit dem Abdichtkontakt eingeklemmt werden, so dass eine hohe Dichtigkeit des Abdichtkontakts besteht und insbesondere kein Austritt von Flüssigkeit an dem Abdichtkontakt möglich ist. Bevorzugt hat der mindestens eine Gegenhalter eine L-förmige Querschnittsfläche und greift so abschnittsweise in das Gehäuse der Pumpe ein bzw. umgreift das verformbare Element.

Der mindestens eine Gegenhalter muss nicht mit dem Pumpengehäuse verbunden sein. Der mindestens eine Gegenhalter kann gegenüber dem Pumpengehäuse beweglich sein. Wichtig ist, dass zwischen dem mindestens einen Gegenhalter und dem Pumpengehäuse mindestens eine (ringförmige) Aufnahme gebildet ist, in der der (ringförmige) Randbereich des verformbaren Elements aufgenommen ist. Der mindestens eine Gegenhalter kann Bestandteil eines Gehäuseflanschs sein, der an dem Pumpengehäuse befestigt ist. Der mindestens eine Gegenhalter kann auch ein nicht mit dem Gehäuseflansch verbundenes, gegenüber dem Gehäuseflansch bewegliches Bauteil sein.
Weiterhin vorteilhaft ist die Pumpe, wenn sich seitlich des verformbaren Elements mindestens eine Anschlagsfläche befindet und wobei mindestens ein (ringförmiger) Randbereich des verformbaren Elements an der mindestens einen Anschlagsfläche anliegt.
Die Anschlagfläche ist vorzugsweise ebenfalls ringförmig. Vorzugsweise ist die Anschlagfläche in einer zur Achse der Pumpe orthogonalen Ebene angeordnet. Wenn sich der Druck in dem Förderkanal erhöht, wird der Randbereich an die Anschlagfläche der (ringförmigen) Aufnahme gedrückt. Dabei dehnt sich das verformbare Element in radialer Richtung aus, weil mehr Material des verformbaren Elements in die (ringförmige) Aufnahme gedrückt wird. Hierdurch wird die Anpresskraft an den Abdichtkontakten erhöht. Die Abdichtung des Förderkanals erhöht sich also bei erhöhtem Druck in dem Förderkanal. Besonders hat das verformbare Element in axialer Richtung beidseitig Randbereiche, die in entsprechenden (ringförmigen) Aufnahmen mit (ringförmigen Anschlagflächen) angeordnet sind. Das verformbare Element weist in axialer Richtung beidseitig und umlaufend in einem Randbereich jeweils einen starren Zentrierungsring auf. Diese starren Zentrierungsringe können an dem verformbaren Element befestigt sein. Beispielsweise können die Zentrierungsringe an dem verformbaren Element angespritzt oder angeklemmt sein. Die Zentrierungsringe bilden Gegenhalter, welche zusammen mit dem Pumpengehäuse ringförmige Aufnahmen bilden, in welche die Randbereich des verformbaren Elements verspannt sind. Mit der Eigenschaft "starr" ist vorliegend insbesondere gemeint, dass die Zentrierungsringe im Vergleich zu dem verformbaren Element starr sind. Die Zentrierungsringe werden durch das verformbare Element in dem Pumpengehäuse zentriert. Die Zentrierungsringe sind dafür in radialer Richtung beweglich gelagert. Der Durchmesser der Zentrierungsringe ist in Abhängigkeit des Durchmessers der Umfangsfläche des Pumpengehäuses und in Abhängigkeit der Materialdicke des verformbaren Elementes so festgelegt, dass das verformbare Element im Bereich der Abdichtkontakte vollständig umlaufend und fluiddicht an der Umfangsfläche anliegt. Der (ringförmige) Abdichtkontakt wird von einer umlaufenden Aufdickung in dem Randbereich des verformbaren Elements ausgebildet. Vorzugsweise wird die konkave bzw. zurücktretende Kanaloberfläche des verformbaren Elements durch die umlaufende Aufdickung in dem Randbereich gebildet. Die Kanaloberfläche hat einen zentralen Bereich, der (in axialer Richtung beidseitig) von der umlaufenden Aufdickung umgeben ist und der in einer bevorzugten Ausführungsvariante eben ist. Durch eine derartige Aufdickung tritt an dem Abdichtkontakt eine Dichtwirkung so wie bei einer üblichen O-Ringdichtung auf. Eine O-Ringdichtung ist ein besonders wirkungsvolles Dichtungskonzept, dessen Dichtwirkung bekannt ist. Insbesondere ist es möglich, die druckabhängige Dichtwirkung des Abdichtkontakts in Abhängigkeit des Drucks in dem Förderkanal zu berechnen und die Aufdickung und die Aufnahme entsprechend zu dimensionieren. Die Eigenschaft "konkav" bzw. "zurücktretend" der Kanaloberfläche kann zusätzlich durch eine konkave Form des zentralen Bereichs der Kanaloberfläche unterstützt sein. Die konkave Kanaloberfläche kann allerdings auch durch eine ebene Form der Oberfläche des verformbaren Elements in Kombination mit den beschriebenen Aufdickungen des verformbaren Elements im Randbereich realisiert sein.
Hier auch beschrieben werden soll ein Kraftfahrzeug, aufweisend eine Verbrennungskraftmaschine, eine Abgasbehandlungsvorrichtung zur Reinigung der Abgase der Verbrennungskraftmaschine sowie eine beschriebene Pumpe, wobei die Pumpe dazu eingerichtet ist, eine Flüssigkeit (insbesondere Harnstoff-Wasser-Lösung) zur Abgasreinigung (insbesondere nach dem SCR-Verfahren) aus einem Tank zu einem Injektor zu fördern, mit dem das flüssige Additiv der Abgasbehandlungsvorrichtung zugeführt werden kann.

Die Erfindung sowie das technische Umfeld werden nachfolgend anhand der Figuren näher erläutert. Es ist darauf hinzuweisen, dass die Figuren und insbesondere die in den Figuren dargestellten Größenverhältnisse nur schematisch sind. Die Figuren dienen zur Veranschaulichung einzelner Merkmale der beschriebenen Pumpe. In den verschiedenen Figuren dargestellte Ausführungsvarianten können in beliebiger Weise miteinander kombiniert werden. Insbesondere ist es nicht erforderlich, dass sämtliche in einer Figur dargestellten Merkmale jeweils als Einheit betrachtet werden. Es zeigen:
- Fig. 1:: eine isometrische Darstellung einer Pumpe,
- Fig. 2:: einen Schnitt durch die Pumpe aus Fig. 1,
- Fig. 3:: ein verformbares Element einer Pumpe,
- Fig. 4:: einen Schnitt durch das verformbare Element aus Fig. 3,
- Fig. 5:: einen abschnittsweisen Schnitt durch die Pumpe gemäß Fig. 2,
- Fig. 6:: einen der Fig. 4 entsprechenden Schnitt durch eine Pumpe des Stands der Technik,
- Fig. 7:: eine weitere Darstellung des Schnitts aus Fig. 5 zum Vergleich mit Fig. 6,
- Fig. 8:: einen der Fig. 5 entsprechenden Schnitt durch eine weitere Ausführungsvariante einer beschriebenen Pumpe,
- Fig. 9:: ein verformbares Element für eine Pumpe gemäß der Ausführungsvariante aus Fig. 8.
- Fig. 10:: ein Kraftfahrzeug, aufweisend eine Pumpe zur Durchführung des SCR Verfahrens.

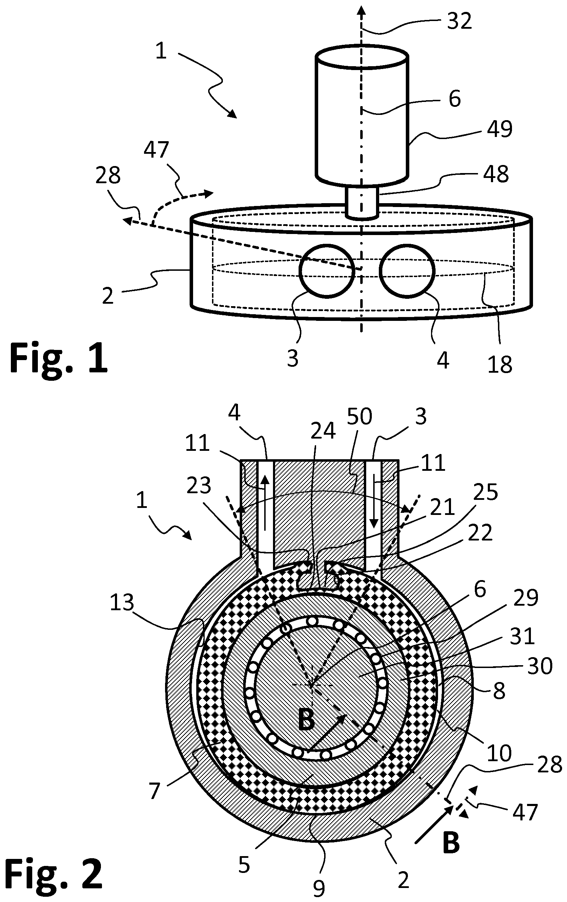

In Fig. 1 ist eine Pumpe 1 zu erkennen, die ein Pumpengehäuse 2 mit einem Einlass 3 und einem Auslass 4 aufweist. In dem Pumpengehäuse 2 kann ein (hier nicht dargestellter) Exzenter positioniert werden, der zur Förderung von Flüssigkeit von dem Einlass 3 zu dem Auslass 4 gedreht werden kann. Zum Antrieb des Exzenters ist entlang einer Achse 6 der Pumpe oberhalb des Pumpengehäuses 2 ein (elektrischer) Antrieb 49 vorgesehen, der über eine Antriebswelle 48 mit dem Exzenter verbunden ist. Zur weiteren Beschreibung der Pumpe 1 soll hier zusätzlich zu der Achse 6 ein zylindrisches Koordinatensystem mit einer axialen Richtung 32 entlang der Achse 6, einer senkrecht auf der Achse 6 und der Axialrichtung 32 stehenden radialen Richtung 28 sowie einer tangential zu der axialen Richtung 32 und senkrecht auf der radialen Richtung 28 stehenden Umfangsrichtung 47 angegeben werden. Außerdem kann eine Mittelebene 18 benannt werden, die das Pumpengehäuse 2 und die in dem Pumpengehäuse 2 angeordneten Komponenten (insbesondere den nicht dargestellten Exzenter und ein nicht dargestelltes verformbares Element) mittig unterteilt. Vorzugsweise sind das Pumpengehäuse 2 und der Exzenter und das verformbare Element jeweils symmetrisch zur Mittelebene 18 ausgebildet.

In Fig. 2 ist ein Schnitt durch die Pumpe gemäß Fig. 1 in der definierten Mittelebene dargestellt. Um dies zu verdeutlichen, sind die Umfangsrichtung 47 und die radiale Richtung 28 in der Fig. 2 bezeichnet.

Zu erkennen ist das Pumpengehäuse 2 mit dem Einlass 3 und dem Auslass 4, die in einem Winkel 50 an dem Pumpengehäuse 2 angeordnet sind. In dem Pumpengehäuse 2 befindet sich der Exzenter 5, der um eine Achse 6 eine exzentrische Taumelbewegung ausführen kann. Der Exzenter 5 ist in einen inneren Exzenterbereich 29 und einen äußeren Lagerring 30 und einem Lager 31 unterteilt. Wenn der innere Exzenterbereich 29 eine exzentrische Drehbewegung um die Achse 6 herum ausführt, überträgt das Lager 31 diese auf den Lagerring 30, so dass der Lagerring 30 eine exzentrische Taumelbewegung ausführt. Zwischen dem Pumpengehäuse 2 und dem Exzenter 5 existiert ein verformbares Element 7 und ein Förderkanal 8. Der Förderkanal 8 ist zwischen dem Pumpengehäuse 2 und dem verformbaren Element 7 ausgebildet. Abschnittsweise drückt der Exzenter 5 das verformbare Element 7 derart gegen das Pumpengehäuse 2, dass eine verschiebbare Abdichtung 9 ausgebildet ist, die den Förderkanal 8 unterbricht und den Förderkanal 8 in geschlossene Pumpenvolumina 10 unterteilt. Durch eine Drehung des Exzenters 5 kann die verschiebbare Abdichtung 9 entlang einer Förderrichtung 11 von dem Einlass 3 zu dem Auslass 4 verschoben werden.

Das verformbare Element 7 gemäß Fig. 2 hat zwischen dem Einlass 3 und dem Auslass 4 eine stationäre Abdichtung 25, welche eine Rückströmung von Flüssigkeit aus dem Auslass 4 zurück zu dem Einlass 3 verhindert. Die stationäre Abdichtung 25 ist mit einer Ausnehmung 21 ausgebildet, die Hinterschnitte 22 aufweist, die jeweils von Fortsätzen 23 des verformbaren Elements 7 überspannt werden. Die Ausnehmung 21 ist hier T-förmig gestaltet. In die Ausnehmung 21 greift ein Halteabschnitt des Pumpengehäuses 2 ein. Dieser Halteabschnitt 24 kann integrierter Bestandteil des Pumpengehäuses 2 oder ein von dem Pumpengehäuse 2 getrenntes zusätzlich in das Pumpengehäuse 2 eingesetztes Bauteil sein. Durch die Ausnehmung 21 und den Halteabschnitt 24 wird das verformbare Element in dem Pumpengehäuse 2 drehfest fixiert. In der Fig. 2 ist nur eine mögliche Ausführungsvariante einer stationären Abdichtung 25 dargestellt. Es sind verschiedene weitere Varianten einer stationären Abdichtung 25 möglich. Wichtig ist nur, dass eine Rückströmung von Flüssigkeit von dem Auslass 4 zurück zu dem Einlass 3 hier wirkungsvoll verhindert wird. Dazu kann das verformbare Element 7 im Bereich der stationären Abdichtung 25 an das Pumpengehäuse 2 beispielsweise auch angeklebt sein.

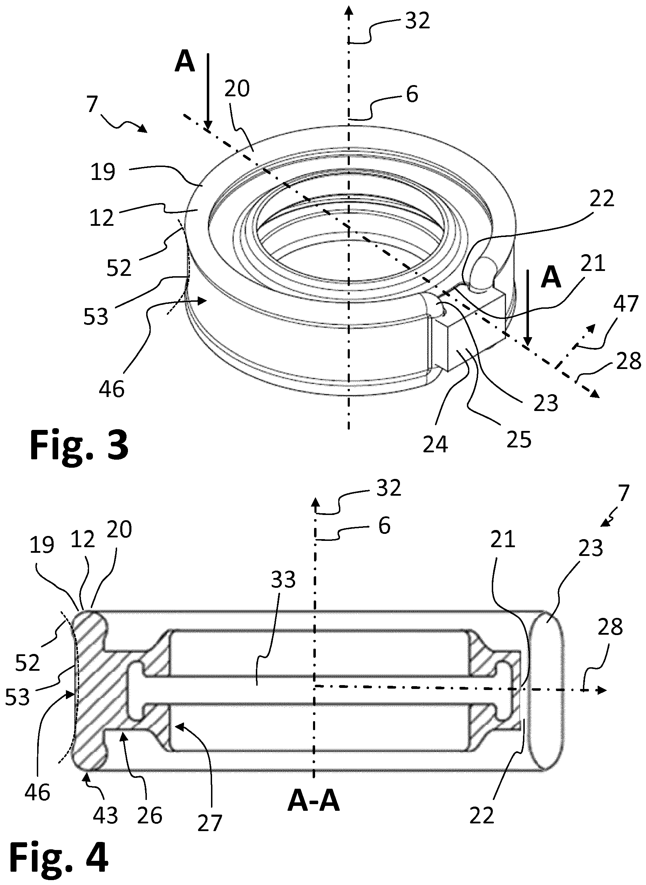

Fig. 3 zeigt eine isometrische Darstellung des verformbaren Elements 7 der Pumpe. Fig. 4 zeigt das gleiche verformbare Element 7 in einer Schnittansicht. Zur räumlichen Orientierung ist in der Figur das Koordinatensystem aus axialer Richtung 32 entlang der Achse 6, Umfangsrichtung 47 und radialer Richtung 28 dargestellt. Das verformbare Element 7 weist eine (äußere) zurücktretende Kanaloberfläche 46 auf, die in axialer Richtung 32 konkav geformt ist. Die konkave Form der Kanaloberfläche 46 ist in Fig. 3 durch eine gestrichelte Markierungslinie 52 verdeutlicht. Die konkave bzw. zurücktretende Kanaloberfläche 46 des verformbaren Elements 7 hat in einem umlaufenden Randbereich 20 eine Aufdickung 19, die einen Abdichtkontakt 12 bildet, in dem das verformbare Element 7 an der hier nicht dargestellten Umfangsfläche des Pumpengehäuses anliegt. Bevorzugt ist die Eigenschaft "konkav" der konkaven bzw. zurücktretenden Kanaloberfläche 46 durch die beidseitige Aufdickung 19 bewirkt. Die beidseitige Aufdickung 19 umgibt einen zentralen Bereich 53 an dem verformbaren Element 7, wobei der zentrale Bereich 53 vorzugsweise eben ist. So kann durch den zentralen Bereich 53 und die beidseitige Aufdickung 19 die konkave bzw. zurücktretende Kanaloberfläche 46 gebildet sein. Zusätzlich kann der zentrale Bereich 53 selbst auch noch eine konkave Form aufweisen. Zu erkennen ist auch eine Ausnehmung 21 an der konkaven bzw. zurücktretenden Kanaloberfläche 46 des verformbaren Elements. Die Ausnehmung 21 ist dabei von einem Hinterschnitt 22 und sich von über den Hinterschnitt 22 erstreckenden Fortsätzen 23 begrenzt. In die Ausnehmung 21 greift ein Halteabschnitt 24 des hier nicht dargestellten Pumpengehäuses 2 ein. Mit der Ausnehmung 21 wird die weiter vorne beschriebene stationäre Abdichtung 25 ausgebildet.

Zur Orientierung sind in Fig. 4 die Achse 6 sowie die axiale Richtung 32 sowie die radiale Richtung 28 ebenfalls dargestellt. Zu erkennen ist auch die konkave bzw. zurücktretenden Kanaloberfläche 46 des verformbaren Elements 7, die durch die Markierungslinie 52 verdeutlicht ist und durch die Aufdickungen 19 im Randbereich sowie den zentralen Bereich 53 der Kanaloberfläche 46 gebildet ist. Auf der rechten Seite ist in Fig. 4 das verformbare Element im Bereich der Ausnehmung 21 abgeschnitten, so dass der Hinterschnitt 22 und ein Fortsatz 23 erkennbar sind. In Fig. 4 ist auch zu erkennen, dass das verformbare Element 7 einen Anlagebereich 43 und einen Stützbereich 27 hat, die durch eine Taille 26 miteinander verbunden sind, wobei der Anlagebereich 43 die Kanaloberfläche 46 ausbildet und zur Anlage an dem Pumpengehäuse zur Bildung des Förderkanals vorgesehen ist. An dem Stützbereich 27 ist eine Klemmnut 33 vorgesehen, mit der das verformbare Element 7 auf einer Klemmleiste (des hier nicht dargestellten Exzenters) geklemmt werden kann.

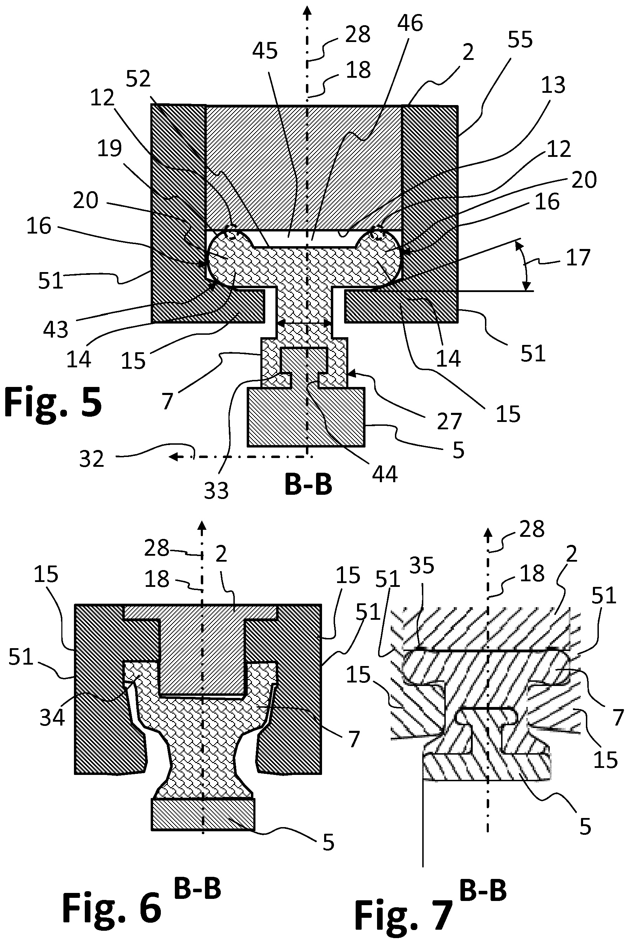

Fig. 5 zeigt den in Fig. 2 markierten abschnittsweisen Schnitt B-B durch die Pumpe. Zur Orientierung sind die Mittelebene 18, die radiale Richtung 28 sowie die axiale Richtung 32 vermerkt. Zu erkennen sind das Pumpengehäuse 2 und der Exzenter 5 und das verformbare Element 7 zwischen dem Exzenter 5 und dem Pumpengehäuse 2. Zusätzlich zu erkennen sind die Umfangsfläche 13 des Pumpengehäuses 2 sowie die konkave bzw. zurücktretende Kanaloberfläche 46 des verformbaren Elements 7 sowie die zwei linienförmigen Abdichtkontakte 12 zwischen dem verformbaren Element 7 und dem Pumpengehäuse 2, die zusammen den Kanalquerschnitt 45 begrenzen.

Das verformbare Element 7 hat einen Anlagebereich 43, der die konkave bzw. zurücktretende Kanaloberfläche 46 ausbildet. Darüber hinaus hat das verformbare Element 7 einen gegenüber dem Anlagebereich 43 ausgebildeten Stützbereich 27. In dem Stützbereich 27 hat das verformbare Element eine Klemmnut 33, die in eine Klemmleiste 44 des Exzenters 5 eingreift. Die konkave bzw. zurücktretende Kanaloberfläche 46 ist durch einen (ebenen) zentralen Bereich 53 und sich beidseitig daran anschließende Randbereiche 20 gebildet, wobei in den Randbereichen 20 jeweils Aufdickungen 19 ausgebildet sind.

In Fig. 5 sind außerdem zwei Gegenhalter 15 dargestellt, die von Gehäuseflanschen 51 gebildet sind, die als ringförmige Bauteile beidseitig in das Pumpengehäuse 2 eingesetzt sind und jeweils eine ringförmige Aufnahme 14 bilden, in der die Randbereiche 20 des verformbaren Elements 7 aufgenommen sind. Der Gegenhalter 15 und das Pumpengehäuse 2 umgreifen das verformbare Element 7 nur abschnittsweise. In der Aufnahme 14 befindet sich seitlich des verformbaren Elements 7 jeweils eine Anschlagfläche 16, an der das verformbare Element 7 anliegt. Wenn der Druck in dem Förderkanal 8 steigt, werden die Randbereiche 20 stärker an die Anschlagflächen 16 gedrückt. Die Aufnahmen 14 weisen vorzugsweise nach außen hin (jeweils in axialer Richtung 32 von der Mittelebene 18 weg) eine Abschrägung 17 auf, durch die sich die Aufnahme 14 hin zu der Anschlagfläche 16 nach außen verjüngt. Hierdurch kann unterstützt werden, dass eine Presskraft auf den Abdichtkontakt 12 ansteigt, je fester der Randbereich 20 durch den Druck in dem Förderkanal 8 nach außen an die Anschlagfläche 16 gedrückt wird.

Ein Kanalquerschnitt 45 des Förderkanals 8 wird von der Umfangsfläche 13 des Pumpengehäuses 2, der konkaven bzw. zurücktretende Kanaloberfläche 46 des verformbaren Elements 7 und den beiden ringförmigen Abdichtkontakten 12 begrenzt.

In den Fig. 6 und 7 ist der Querschnitt B-B aus Fig. 5 noch einmal schematisch dargestellt, wobei Fig. 6 einen entsprechenden Querschnitt bei einer Pumpe gemäß des Stands der Technik (beispielsweise gemäß den Druckschriften US 2,544,628, US 3,408,947, DE 285 39 16 A1 und DE 381 52 52 A1) beschreibt und die Fig. 7 den Aufbau der hier beschriebenen Pumpe verdeutlicht. Zur Orientierung sind hier jeweils (wie in Fig. 5) die Mittelebene 18, die radiale Richtung 28 und die axiale Richtung 32 aufgetragen. Weiterhin zu erkennen sind das Pumpengehäuse 2, der Exzenter 5 und das verformbare Element 7 sowie die Gegenhalter 15, die von Gehäuseflanschen 51 gebildet sind, mit dem das verformbare Element 7 an dem Pumpengehäuse 2 verspannt ist. Gemäß der Ausführungsvariante des Stands der Technik in Fig. 6 erstreckt sich das verformbare Element 7 abschnittsweise um das Pumpengehäuse 2 herum und ist mit einer axialen Klemmung 34 zwischen den Gegenhaltern 15 und dem Pumpengehäuse 2 verspannt. Gemäß Fig. 7 existiert eine radiale Klemmung 35 des verformbaren Elements 7 zwischen dem Pumpengehäuse 2 und dem Exzenter 5, wie sie auch in Zusammenhang mit Fig. 5 durch die entsprechende Anordnung der ringförmigen Randbereiche des verformbaren Elements 7 schon beschrieben wurde.

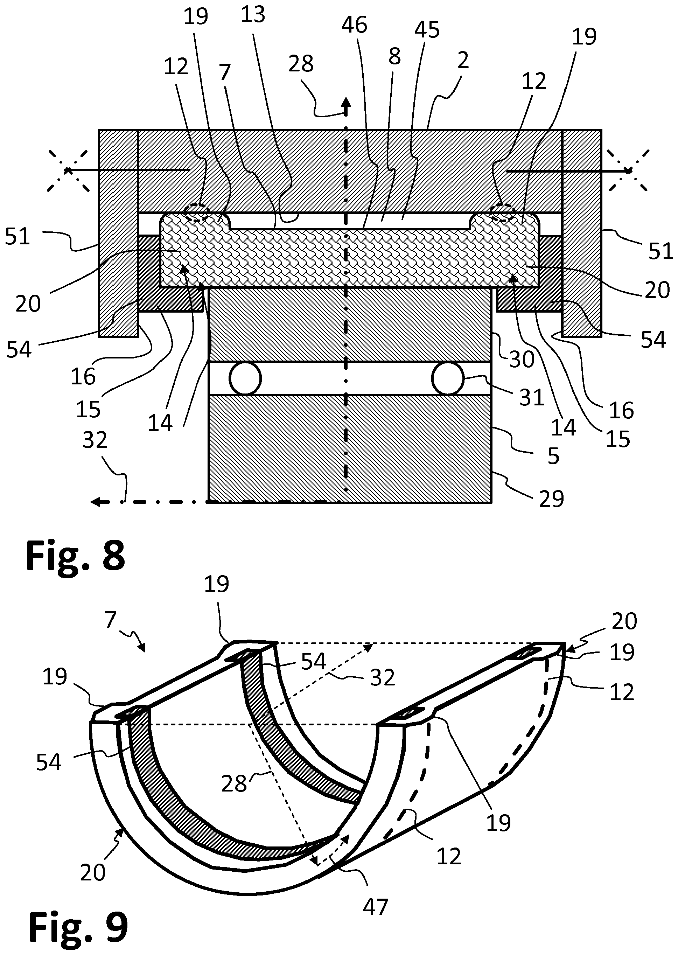

Fig. 8 zeigt einen der Fig. 5 entsprechenden Querschnitt durch eine weitere Ausführungsvariante einer beschriebenen Pumpe. Zu erkennen sind auch hier das Pumpengehäuse 2, das verformbare Element 7 und der Exzenter 5. Zwischen dem verformbaren Element 7 und dem Pumpengehäuse 2 ist der Förderkanal 8 ausgebildet. Ein Kanalquerschnitt 45 des Förderkanals 8 wird von einer konkaven bzw. zurücktretenden Kanaloberfläche 46 des verformbaren Elements 7, einer Umfangsfläche 13 des Pumpengehäuses 2 sowie zwei ringförmigen Abdichtkontakten 12 zwischen der Umfangsfläche 13 und der konkaven bzw. zurücktretenden Kanaloberfläche 46 begrenzt.

Zur Orientierung zeigt die Fig. 8 auch die radiale Richtung 28 sowie die axiale Richtung 32 entsprechend zu den Fig. 5 bis 7.

Die ringförmigen Abdichtkontakte 12 sind durch Aufdickungen 19 des verformbaren Elements 7 in den Randbereichen 20 ausgebildet. Die Randbereiche 20 des verformbaren Elements sind in ringförmigen Aufnahmen 14 aufgenommen, wobei die ringförmigen Aufnahmen 14 von dem Pumpengehäuse 2 und Gegenhaltern 15 gebildet werden. Die Gegenhalter 15 werden gemäß der Ausführungsvariante der Pumpe aus Fig. 8 von Zentrierungsringen 54 gebildet, die in radialer Richtung 28 beweglich gelagert sind. Die Zentrierungsringe 54 können mit dem verformbaren Element 7 verbunden sein. Die Zentrierungsringe 54 bzw. das verformbare Element 7 liegt jeweils in axialer Richtung 32 an einer Anschlagfläche 16 an. Die Zentrierungsringe 54 ermöglichen eine alternative Ausgestaltung der Gegenhalter 15 und der ringförmigen Aufnahmen 14 für die ringförmigen Randbereiche 20 des verformbaren Elements 7, wobei die Zentrierungsringe 54 gleichzeitig eine selbständige Zentrierung und Ausrichtung der Gegenhalter 15 und der ringförmigen Aufnahme 14 ermöglichen.

Der Exzenter 5 ist gemäß Fig. 8 beispielhaft mit einem inneren Exzenterbereich 29, einem äußeren Lagerring 30 und einem dazwischen angeordneten Lager 31 dargestellt.

Fig. 9 zeigt ein verformbares Element 7 für eine Pumpe gemäß der in Fig. 8 dargestellten Ausführungsvariante. Das verformbare Element 7 weist in den beiden (in axialer Richtung 32) angeordneten Randbereichen 20 jeweils Zentrierungsringe 54 auf, die zusammen mit dem hier nicht dargestellten Pumpengehäuse 2 im Sinne der Darstellung aus Fig. 8 Gegenhalter bzw. Aufnahmen für die Randbereiche 20 des verformbaren Elementes 7 bilden. Die Zentrierungsringe 54 sind gemäß Fig. 9 zur verbesserten Darstellung allerdings nicht derart ausgeführt, dass diese die Randbereiche 20 des verformbaren Elementes 7 umgreifen. Sie sind in das verformbare Element 7 integriert. Die Zentrierungsringe 54 entsprechen aber der Wirkungsweise der Zentrierungsringe 54 bei der Ausführungsvariante gemäß Fig. 9 mit L-förmigen, die Randbereiche 20 umgreifenden Zentrierungsringen. Zur Orientierung sind in Fig. 9 auch Aufdickungen 19 des verformbaren Elementes 7 dargestellt. An den Aufdickungen 19 werden mit dem hier nicht dargestellten Pumpengehäuse gestrichelt angedeutete (ringförmige) Abdichtkontakte 12 ausgebildet. Zur Orientierung zeigt die Fig. 9 auch die Umfangsrichtung 47, die radiale Richtung 28 und die axiale Richtung 32.

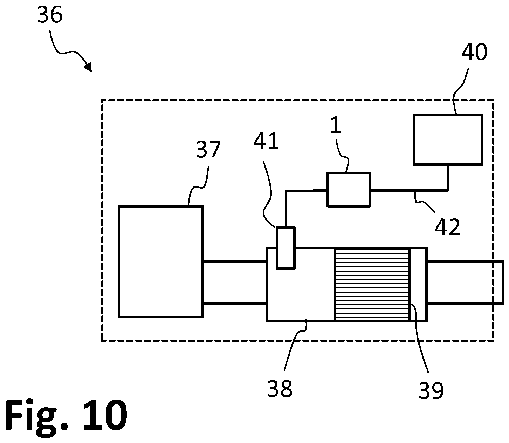

Fig. 10 zeigt ein Kraftfahrzeug 36 mit einer Verbrennungskraftmaschine 37 und eine Abgasbehandlungsvorrichtung 38 zur Reinigung der Abgase der Verbrennungskraftmaschine 37. In der Abgasbehandlungsvorrichtung 38 ist ein SCR-Katalysator 39 zur Durchführung des Verfahrens der selektiven katalytischen Reduktion vorgesehen. Der Abgasbehandlungsvorrichtung 38 ist ein flüssiges Additiv zur Abgasreinigung mit einem Injektor 41 zuführbar. Der Injektor 41 wird über eine Leitung 42 mit flüssigem Additiv aus einem Tank 40 versorgt. An der Leitung 42 ist eine beschriebene Pumpe 1 angeordnet, die die Förderung und ggf. Dosierung des flüssigen Additivs durchführt.

### Bezugszeichenliste

1 Pumpe
2 Pumpengehäuse
3 Einlass
4 Auslass
5 Exzenter
6 Achse
7 verformbares Element
8 Förderkanal
9 Verschiebbare Abdichtung
10 Pumpenvolumen
11 Förderrichtung
12 Abdichtkontakt
13 Umfangsfläche
14 Aufnahme
15 Gegenhalter
16 Anschlagfläche
17 Abschrägung
18 Mittelebene
19 Aufdickung
20 Randbereich
21 Ausnehmung
22 Hinterschnitt
23 Fortsatz
24 Halteabschnitt
25 Stationäre Abdichtung
26 Taille
27 Stützbereich
28 Radiale Richtung
29 Exzenterbereich
30 Lagerring
31 Lager
32 axiale Richtung
33 Klemmnut
34 axiale Klemmung
35 radiale Klemmung
36 Kraftfahrzeug
37 Verbrennungskraftmaschine
38 Abgasbehandlungsvorrichtung
39 SCR-Katalysator
40 Tank
41 Injektor
42 Leitung
43 Anlagebereich
44 Klemmleiste
45 Kanalquerschnitt
46 Kanaloberfläche
47 Umfangsrichtung
48 Antriebswelle
49 Antrieb
50 Winkel
51 Gehäuseflansch
52 Markierungslinie
53 zentraler Bereich
54 Zentrierungsring

## Patentansprüche

1. Pumpe (1) zur Förderung einer Flüssigkeit, aufweisend zumindest ein Pumpengehäuse (2) mit mindestens einem Einlass (3) und mindestens einem Auslass (4), wobei an dem Pumpengehäuse (2) ein Exzenter (5) angeordnet ist, der um eine Achse (6) relativ zu dem Pumpengehäuse (2) drehbar ist, wobei zwischen dem Pumpengehäuse (2) und dem Exzenter (5) ein verformbares Element (7) angeordnet ist und wobei mit dem verformbaren Element (7) und einer Umfangsfläche (13) des Pumpengehäuses (2) ein Förderkanal (8) von dem mindestens einen Einlass (3) zu dem mindestens einen Auslass (4) ausgebildet ist und wobei weiter das verformbare Element (7) von dem Exzenter (5) abschnittsweise derart gegen das Pumpengehäuse (2) gedrückt wird, so dass mindestens eine verschiebbare Abdichtung (9) des Förderkanal (8) und zumindest ein geschlossenes Pumpenvolumen (10) in dem Förderkanal (8) ausgebildet sind, die zur Förderung der Flüssigkeit durch eine Bewegung des Exzenters (5) entlang des Förderkanals (8) von dem Einlass (3) zu dem Auslass (4) verschiebbar sind, wobei zumindest ein Kanalquerschnitt (45) des Förderkanals (8) durch die Umfangsfläche (13), eine zurücktretende Kanaloberfläche (46) des verformbaren Elements (7) und mindestens einen Abdichtkontakt (12) zwischen der Umfangsfläche (13) und dem verformbaren Element (7) begrenzt ist, **dadurch gekennzeichnet, dass** das verformbare Element (7) in axialer Richtung beidseitig und umlaufend in einem Randbereich (20) jeweils einen starren Zentrierungsring (54) aufweist und die Zentrierungsringe (54) in radialer Richtung beweglich gelagert sind und der mindestens eine Abdichtkontakt (12) von einer umlaufenden Aufdickung (19) in dem Randbereich (20) des verformbaren Elementes (7) gebildet ist.

2. Pumpe (1) nach Patentanspruch 1, wobei sich die Umfangsfläche (13) in axialer Richtung (32) seitlich des Förderwegs beidseitig fortsetzt.

3. Pumpe (1) nach Patentanspruch 1 oder 2, wobei von der Umfangsfläche (13) des Pumpengehäuses (2) und mindestens einem Gegenhalter (15) mindestens eine Aufnahme (14) gebildet ist, in der mindestens ein Randbereich (20) des verformbaren Elements (7) aufgenommen ist.

4. Pumpe (1) nach einem der vorhergehenden Patentansprüche, wobei sich seitlich des verformbaren Elementes (7) mindestens eine Anschlagsfläche (16) befindet und wobei mindestens ein Randbereich (20) des verformbaren Elementes (7) an der mindestens einen Anschlagsfläche (16) anliegt.

5. Kraftfahrzeug (36), aufweisend eine Verbrennungskraftmaschine (37), eine Abgasbehandlungsvorrichtung (38) zur Reinigung der Abgase der Verbrennungskraftmaschine (37), sowie eine Pumpe (1) nach einem der vorhergehenden Patentansprüche, wobei die Pumpe (1) dazu eingerichtet ist, ein flüssiges Additiv zur Abgasreinigung aus einem Tank (40) zu einem Injektor (41) zu fördern, mit dem das flüssige Additiv der Abgasbehandlungsvorrichtung (38) zugeführt werden kann.

## Claims

1. Pump (1) for delivering a liquid, having at least one pump housing (2) with at least one inlet (3) and at least one outlet (4), wherein, on the pump housing (2), there is arranged an eccentric (5) which is rotatable relative to the pump housing (2) about an axis (6), wherein a deformable element (7) is arranged between the pump housing (2) and the eccentric (5), and wherein a delivery duct (8) is formed from the at least one inlet (3) to the at least one outlet (4) by the deformable element (7) and by a circumferential surface (13) of the pump housing (2), and wherein furthermore, the deformable element (7) is pressed in sections against the pump housing (2) by the eccentric (5) such that at least one displaceable seal (9) of the delivery duct (8) and at least one closed pump volume (10) in the delivery duct (8) are formed, these being displaceable along the delivery duct (8) from the inlet (3) to the outlet (4) by means of a movement of the eccentric (5) for the delivery of the liquid, wherein at least one duct cross section (45) of the delivery duct (8) is delimited by the circumferential surface (13), by a set-back duct surface (46) of the deformable element (7) and by at least one contact seal (12) between the circumferential surface (13) and the deformable element (7),**characterized in that** the deformable element (7) has in each case one rigid centering ring (54) in encircling fashion in an edge region (20) on both sides in an axial direction and the centering rings (54) are mounted so as to be movable in a radial direction and the at least one contact seal (12) is formed by an encircling thickened section (19) in the edge region (20) of the deformable element (7).

2. Pump (1) according to Patent Claim 1, wherein the circumferential surface (13) continues in the axial direction (32) beyond the delivery path to both sides.

3. Pump (1) according to Patent Claim 1 or 2, wherein the circumferential surface (13) of the pump housing (2) and at least one counter bracket (15) form at least one receptacle (14) in which at least one edge region (20) of the deformable element (7) is received.

4. Pump (1) according to one of the preceding patent claims, wherein at least one abutment surface (16) is situated to the sides of the deformable element (7), and wherein at least one edge region (20) of the deformable element (7) bears against the at least one abutment surface (16).

5. Motor vehicle (36), having an internal combustion engine (37), an exhaust-gas treatment device (38) for the purification of the exhaust gases of the internal combustion engine (37), and a pump (1) according to one of the preceding patent claims, wherein the pump (1) is designed to deliver a liquid additive for exhaust-gas purification from a tank (40) to an injector (41), by means of which the liquid additive can be supplied to the exhaust-gas treatment device (38).

## Revendications

1. Pompe (1) pour transporter un liquide, présentant au moins un corps de pompe (2) avec au moins une entrée (3) et au moins une sortie (4), dans laquelle un excentrique (5) est disposé sur le corps de pompe (2), lequel peut tourner autour d'un axe (6) par rapport au corps de pompe (2), dans laquelle un élément déformable (7) est disposé entre le corps de pompe (2) et l'excentrique (5) et dans laquelle un canal de transport (8) de ladite au moins une entrée (3) à ladite au moins une sortie (4) est formé avec l'élément déformable (7) et une surface périphérique (13) du corps de pompe (2) et dans laquelle l'élément déformable (7) est en outre pressé par l'excentrique (5) localement contre le corps de pompe (2) de telle manière qu'au moins un joint d'étanchéité déplaçable (9) du canal de transport (8) et au moins un volume de pompe fermé (10) soient formés dans le canal de transport (8), qui sont déplaçables de l'entrée (3) à la sortie (4) pour le transport du liquide par un mouvement de l'excentrique (5) le long du canal de transport (8), dans laquelle au moins une section transversale de canal (45) du canal de transport (8) est limitée par la surface périphérique (13), une surface de canal en retrait (46) de l'élément déformable (7) et au moins un contact étanche (12) entre la surface périphérique (13) et l'élément déformable (7), **caractérisée en ce que** l'élément déformable (7) présente sur les deux côtés en direction axiale et en périphérie dans une région de bord (20) respectivement un anneau de centrage rigide (54) et les anneaux de centrage (54) sont montés de façon mobile en direction radiale et ledit au moins un contact étanche (12) est formé par une surépaisseur périphérique (19) dans la région de bord (20) de l'élément déformable (7).

2. Pompe (1) selon la revendication 1, dans laquelle la surface périphérique (13) se prolonge en direction axiale (32) de part et d'autre latéralement au chemin de transport.

3. Pompe (1) selon la revendication 1 ou 2, dans laquelle au moins un logement (14) est formé par la surface périphérique (13) du corps de pompe (2) et au moins un contre-appui (15), dans lequel au moins une région de bord (20) de l'élément déformable (7) est logée.

4. Pompe (1) selon l'une quelconque des revendications précédentes, **caractérisée en ce qu'**il se trouve au moins une face de butée (16) latéralement à l'élément déformable (7) et dans laquelle au moins une région de bord (20) de l'élément déformable (7) s'applique contre ladite au moins une face de butée (16).

5. Véhicule automobile (36), présentant un moteur à combustion interne (37), un système de traitement des gaz d'échappement (38) pour la purification des gaz d'échappement du moteur à combustion interne (37), ainsi qu'une pompe (1) selon l'une quelconque des revendications précédentes, dans lequel la pompe (1) est conçue pour fournir un additif liquide pour la purification des gaz d'échappement à partir d'un réservoir (40) à un injecteur (41), avec lequel l'additif liquide peut être fourni au système de traitement des gaz d'échappement (38).
